(19) Europäisches Patentamt
European Patent Office
Office européen des brevets

(11) **EP 3 040 122 A1**

(12) **EUROPEAN PATENT APPLICATION**
published in accordance with Art. 153(4) EPC

(43) Date of publication:
06.07.2016 Bulletin 2016/27

(51) Int Cl.:
*B01J 29/70* [(2006.01)]    *B01D 53/94* [(2006.01)]
*B01J 29/40* [(2006.01)]    *F01N 3/023* [(2006.01)]
*F01N 3/035* [(2006.01)]    *F01N 3/08* [(2006.01)]
*F01N 3/10* [(2006.01)]    *F01N 3/28* [(2006.01)]

(21) Application number: 14840243.1

(22) Date of filing: 20.08.2014

(86) International application number:
PCT/JP2014/071772

(87) International publication number:
WO 2015/029853 (05.03.2015 Gazette 2015/09)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 30.08.2013 JP 2013178813

(71) Applicant: Otsuka Chemical Co., Ltd.
Osaka-shi, Osaka 540-0021 (JP)

(72) Inventors:
• **UETANI, Masatoshi**
Tokushima-shi
Tokushima 771-0193 (JP)
• **MISHIMA, Takahiro**
Tokushima-shi
Tokushima 771-0193 (JP)

(74) Representative: **Ter Meer Steinmeister & Partner Patentanwälte mbB**
Nymphenburger Straße 4
80335 München (DE)

(54) **EXHAUST GAS PURIFICATION FILTER AND EXHAUST GAS PURIFICATION APPARATUS**

(57) Provided are an exhaust gas purification filter in which, even in the coexistence of a catalyst capable of combusting particulate matter (PM) contained in exhaust gases and an SCR catalyst capable of reducing nitrogen oxides in exhaust gases to nitrogen, the catalytic function of the SCR catalyst is prevented from being impaired, and an exhaust gas purification apparatus equipped with the filter. An exhaust gas purification filter includes: an oxide containing one or more elements selected from alkali metals and one or more elements selected from Zr, Si, Al, and Ti; and a zeolite having silica / alumina ratio of 15 or more.

**Description**

Technical Field

This invention relates to: exhaust gas purification filters that include a catalyst capable of combusting particulate matter (PM) contained in exhaust gases and a selective catalytic reduction (SCR) catalyst capable of reducing nitrogen oxides to nitrogen; and exhaust gas purification apparatuses.

Background Art

Exhaust gases discharged from an internal combustion engine, such as a diesel engine, contain toxic components, including PM, nitrogen oxides (NOx), hydrocarbon, and carbon monoxide. Various approaches are being taken for removing these toxic substances. In particular, NOx and PM discharged from diesel vehicles, such as trucks and buses, cause air pollution in urban areas and, therefore, legislations on these toxic substances have been increasingly tightened.

PM is removed by, for example, a method of collecting PM on a honeycomb filter placed in a flow path of exhaust gases and, upon deposition of a predetermined amount of PM thereon, applying heat to the filter to decompose PM by combustion. However, the combustion temperature of PM is 550 to 650°C and higher than ordinary exhaust gas temperature, which requires auxiliary heating systems to the exhaust gas purification apparatus and presents a problem of high energy cost for heat application.

To combust PM at lower temperatures, a honeycomb filter is used which have a catalyst supported thereon. Platinum group metal-based catalysts are known as such catalysts. Platinum group metal-based catalysts oxidize nitrogen monoxide to nitrogen dioxide and the strong oxidation capacity of nitrogen dioxide promotes combustion of PM. However, the amount of production of platinum is extremely small, which carries a risk of significant variations in supply-demand balance and price. To cope with this, Patent Literature 1 proposes silicates, aluminates, and zirconates of alkali metals as catalysts capable of combusting PM at low temperatures using high catalytic activity of the alkali metals.

NOx is removed by, for example, a method using an SCR catalyst. For example, the method is performed by supporting a zeolite-based catalyst on a honeycomb filter placed in an exhaust system and injecting a reductant obtained from an ammonia precursor, such as urea, or ammonia itself into the honeycomb filter to reduce NOx to nitrogen as shown in the reaction formulae (1) to (3). Patent Literature 2 is proposed as such a method.

$$4NH_3 + 4NO + O_2 \rightarrow 4N_2 + 6H_2O \qquad (1)$$

$$2NH_3 + NO + NO_2 \rightarrow 2N_2 + 3H_2O \qquad (2)$$

$$8NH_3 + 6NO_2 \rightarrow 7N_2 + 12H_2O \qquad (3)$$

To remove PM and NOx, devices having the above respective systems are combined together, i.e., the devices are arranged as those independent of each other in a flow path of exhaust gasses, for example, so that the device for removing NOx is disposed downstream of the device for removing PM. However, as a request for downsizing from the market, there is demand for an apparatus in which a device for removing PM and a device for removing NOx are integrated together.

Citation List

Patent Literature

   Patent Literature 1: JP-A-H10-118490
   Patent Literature 2: JP-A-2010-524677

Summary of Invention

Technical Problem

The coexistence of an alkali metal-based catalyst for use to remove PM and an SCR catalyst presents a problem that alkali metal ions contained in the alkali metal-based catalyst react with the SCR catalyst to impair the function served by the SCR catalyst.

An object of the present invention is to provide an exhaust gas purification filter in which, even in the coexistence of a catalyst capable of combusting PM contained in exhaust gases and an SCR catalyst capable of reducing nitrogen oxides to nitrogen, the catalytic function of the SCR catalyst is prevented from being impaired, and an exhaust gas purification apparatus equipped with the filter.

Solution to Problem

The present invention provides the following exhaust gas purification filter and exhaust gas purification apparatus.

Aspect 1: An exhaust gas purification filter including: an oxide containing one or more elements selected from alkali metals and one or more elements selected from Zr, Si, Al, and Ti; and a zeolite having silica / alumina ratio of 15 or more.

Aspect 2: The exhaust gas purification filter according to aspect 1, wherein the oxide is included as a catalyst capable of combusting particulate matter contained in exhaust gases and the zeolite is included as a catalyst capable of reducing to nitrogen oxides to nitrogen.

Aspect 3: The exhaust gas purification filter according to aspect 1 or 2, wherein the oxide is one or more of compounds represented by $A_{2X}Zr_XSi_YO_{3X+2Y}$, $A_XAl_XSi_YO_{2X+2Y}$, $A_{2X}Ti_XSi_YO_{3X+2Y}$, $A_{2X}Ti_YO_{X+2Y}$, $A_{2X}Zr_YO_{X+2Y}$ or $A_XAl_YO_{X/2+3Y/2}$, where A represents one or more alkali metals, X represents a positive real number satisfying $1 \leq X \leq 2$, and Y represents a positive real number satisfying $1 \leq Y \leq 6$.

Aspect 4: The exhaust gas purification filter according to any one of aspects 1 to 3, wherein the zeolite is one or more selected from mordenite zeolite, faujasite zeolite, zeolite A, zeolite L, zeolite β, and ZSM-5 zeolite.

Aspect 5: The exhaust gas purification filter according to any one of aspects 1 to 4, wherein the zeolite contains a transition metal.

Aspect 6: The exhaust gas purification filter according to any one of aspects 1 to 5, wherein the oxide and the zeolite are coated on a support.

Aspect 7: The exhaust gas purification filter according to aspect 6, wherein the support is a honeycomb filter.

Aspect 8: An exhaust gas purification apparatus including the exhaust gas purification filter according to any one of aspects 1 to 7.

Advantageous Effects of Invention

In the present invention, collected PM can be combusted at low temperatures and NOx can be removed by reduction. Description of Embodiments

Hereinafter, a description will be given of an example of a preferred embodiment for working of the present invention. However, the following embodiment is simply illustrative. The present invention is not at all intended to be limited to the following embodiment.

(Oxide)

An oxide for use in the present invention contains one or more elements selected from alkali metals and one or more elements selected from Zr, Si, Al, and Ti. Owing to this composition, it can be considered that PM discharged from an internal combustion engine or the like can be combusted at lower temperatures by high catalytic activity of the alkali metal and the elution of the alkali metal is reduced.

The oxide for use in a preferred embodiment of the present invention can be represented, more specifically, by a general formula of $A_{2X}Zr_XSi_YO_{3X+2Y}$, $A_XAl_XSi_YO_{2X+2Y}$, $A_{2X}Ti_XSi_YO_{3X+2Y}$, $A_{2X}Ti_YO_{X+2Y}$, $A_{2X}Zr_YO_{X+2Y}$, $A_XAl_YO_{X/2+3Y/2}$ or so on. In the formula, A represents alkali metals, X represents a positive real number satisfying $1 \leq X \leq 2$, and Y represents a positive real number satisfying $1 \leq Y \leq 6$. More preferably, Y is a positive real number satisfying $1 \leq Y \leq 4$. Examples of the alkali metal include Li, Na, K, Rb, Cs, and Fr. Preferred among them are Li, Na, K, and Cs because of their economic advantage.

Oxides of $A_{2X}Zr_XSi_YO_{3X+2Y}$ that can be taken as examples include $Li_2ZrSiO_5$, $Na_2ZrSiO_5$, $Na_4Zr_2Si_3O_{12}$, $Na_2ZrSi_2O_7$, $Na_2ZrSi_3O_9$, $K_2ZrSiO_5$, $K_2ZrSi_2O_7$, $K_2ZrSi_3O_9$, $Cs_4Zr_2Si_3O_{12}$, $Cs_2ZrSi_2O_7$, and $Cs_2ZrSi_3O_9$.

Oxides of $A_XAl_XSi_YO_{2X+2Y}$ that can be taken as examples include $LiAlSiO_4$, $LiAlSi_2O_6$, $LiAlSi_3O_8$, $NaAlSiO_4$, $NaAlSi_2O_6NaAlSi_3O_8$, $KAlSiO_4$, $KAlSi_2O_6$, and $KAlSi_3O_8$.

Oxides of $A_{2X}Ti_XSi_YO_{3X+2Y}$ that can be taken as examples include $Li_2TiSiO_5$, $Li_2TiSi_2O_7$, $Li_2TiSi_3O_9$, $Na_2TiSiO_5$, $Na_2TiSi_2O_7$, $Na_2TiSi_3O_9$, $K_2TiSiO_5$, $K_2TiSi_2O_7$, and $K_2TiSi_3O_9$.

Oxides of $A_{2X}Ti_YO_{X+2Y}$ that can be taken as examples include $Na_2TiO_3$, $Na_2Ti_2O_5$, $Na_2Ti_4O_9$, $Na_2Ti_6O_{13}$,

$Na_2Ti_8O_{17}$, $K_2TiO_3$, $K_2Ti_2O_5$, $K_2Ti_4O_9$, $K_2Ti_6O_{13}$, and $K_2Ti_8O_{17}$.

Oxides of $A_{2X}Zr_YO_{X+2Y}$ that can be taken as examples include $Na_2ZrO_3$ and $K_2ZrO_3$.

Oxides of $A_XAl_YO_{X/2+3Y/2}$ that can be taken as examples include $NaAlO_2$, $NaAl_5O_8$, $KAlO_2$, and $KAl_5O_8$.

Preferably, the oxide for use in the present invention is $A_{2X}Zr_XSi_YO_{3X+2Y}$, $A_XAl_XSi_YO_{2X+2Y}$, $A_{2X}Ti_XSi_YO_{3X+2Y}$ or $A_{2X}Ti_YO_{X+2Y}$.

The oxide for use in the present invention can contain other elements of ranges which do not impair its excellent characteristics. Other elements which can be taken as examples include Fe, Cu, Nb, Ce, Ca, Mg, Sr, Ba, Y, Mn, P, La, and Sm. The content rate of other elements is preferably within the range of 0.1 to 30.0% by mole.

Although no particular limitation is placed on the method for producing the oxide for use in the present invention, the oxide can be produced, for example, by selecting source materials from alkali metal salts, zirconium sources, silicon sources, aluminum sources, and titanium sources as appropriate according to the composition of a desired compound, mixing the source materials, and firing them. The firing temperature is preferably within the range of 700 to 1300°C and more preferably within the range of 800 to 1200°C.

The alkali metal salts include alkali metal carbonates; alkali metal hydrogen carbonates; alkali metal hydroxides; alkali metal organic acid salts, such as alkali metal acetates; alkali metal sulfates; and alkali metal nitrates, and the preferred are alkali metal carbonates.

Although no particular limitation is placed on the zirconium source so long as it is a source material containing elemental zirconium and not interfering with the production of the oxide by firing, examples include compounds which can be led to zirconium oxide by firing in air. Examples of such compounds include zirconium oxide, zirconium carbonate hydrate, and zirconium sulfate hydrate and the preferred is zirconium oxide.

Although no particular limitation is placed on the silicon source so long as it is a source material containing elemental silicon and not interfering with the production of the oxide by firing, examples include compounds which can be led to silicon oxide by firing in air. Examples of such compounds include silicon oxide and silicon and the preferred is silicon oxide.

Although no particular limitation is placed on the aluminum source so long as it is a source material containing elemental aluminum and not interfering with the production of the oxide by firing, examples include compounds which can be led to aluminum oxide by firing in air. Examples of such compounds include aluminum oxide, aluminum carbonate hydrate, and aluminum sulfate hydrate and the preferred is aluminum oxide.

Although no particular limitation is placed on the titanium source so long as it is a source material containing elemental titanium and not interfering with the production of the oxide by firing, examples include compounds which can be led to titanium oxide by firing in air. Examples of such compounds include titanium oxide, rutile ores, wet cake of titanium hydroxide, and aqueous titania and the preferred is titanium oxide.

(Zeolite)

A zeolite for use in the present invention has silica / alumina ratio of 15 or more. The lower limit of the silica / alumina ratio is preferably 20 and more preferably 25. The upper limit of the silica / alumina ratio is preferably 100 and more preferably 50. It can be considered that, with this composition, the zeolite can act as an SCR catalyst for NOx with the aid of a reductant to remove NOx by reduction without being influenced by alkali metal ions eluted from the oxide. Reductants that can be used include ammonia precursors, such as urea, ammonium carbonate, hydrazine, and ammonium hydrogen carbonate, and ammonia itself.

Zeolite is a crystalline aluminosilicate and a porous body having a crystal structure in which four oxygen elements are regularly three-dimensionally arranged around and bonded to each of a silicon element and an aluminum element. Examples of the crystal structure of the zeolite for use in the present invention include mordenite zeolite, faujasite zeolite, zeolite A, zeolite L, zeolite β, and ZSM-5 zeolite, and the preferred are zeolite β and ZSM-5 zeolite. Furthermore, to promote the catalytic activity, the zeolite may contain a transition metal, such as Cu, Fe, Pt, Ag, Ti, Mn, Ti, Ni, Co, Pd, Rh, V, and Cr, introduced by ion exchange. The total amount of transition metal is preferably 1 to 15% by mass relative to the total mass of the zeolite. More preferably, the total amount of transition metal is within the range of 1 to 8% by mass.

Zeolites that can be used in the present invention include natural zeolites and synthetic zeolites, but those having the above composition can be used without any other particular limitation. The preferred are synthetic zeolites because they have more uniform silica / alumina ratio, crystal size, and crystalline form and contain less impurities.

(Exhaust Gas Purification Filter)

An exhaust gas purification filter according to the present invention includes the oxide and the zeolite and can combust PM at lower temperature and removes NOx by reduction. Furthermore, the exhaust gas purification filter according to the present invention may include an oxidation catalyst, a three-way catalyst, an oxygen storage catalyst, and so on of ranges which do not impair its excellent characteristics.

In the exhaust gas purification filter according to the present invention, the oxide and the zeolite are preferably coated on a support. Conventionally known supports can be used as the support without any particular limitation except that they have a filtration function. An example of the support is a honeycomb filter. Specifically, a wall-flow honeycomb filter made of ceramic is preferably used. Preferred ceramics which may be used as a material for the support include silicon carbide, cordierite, mullite, alumina, and aluminum titanate and the more preferred is aluminum titanate from the viewpoint of thermal resistance and alkaline resistance. In the case of the wall-flow honeycomb filter, no particular limitation is placed on the number of cells and the wall thickness, but the number of cells is preferably 200 to 400 cells/inch$^2$ and the wall thickness is preferably 200 to 380 $\mu$m. Although there is no particular limitation as to the type of the cell wall surface except that it is porous, the cell wall preferably has pores with a long diameter of about 8 to 18 $\mu$m and the porosity is preferably 45 to 65%.

Examples of the method for supporting the oxide and the zeolite on the support include the immersion method and the spraying method. For example, in the immersion method, the oxide and the zeolite can be supported on the support by preparing a slurry containing the oxide and/or zeolite together with a binder, a dispersant, and so on, immersing the support into the prepared slurry, picking up the support from the slurry, drying it, and then removing organic components by firing at 300°C to 800°C. Alternatively, the oxide and the zeolite can be supported on the support by mixing a ceramic as a source material of the support with the oxide and/or the zeolite, a pore-forming agent, and so on, forming the mixture into the shape of the support, and then firing the formed shape. The oxide and the zeolite may be concurrently or separately supported on the support. The oxide and the zeolite can be used so that they are supported on the surface of the support, the wall surfaces of the cells, the pores, and so on in the above supporting manner.

In the present invention, the amount of oxide and zeolite supported on the support can be appropriately selected depending upon the desired performance. The oxide can be used, for example, within the range of 1 to 40 parts by mass and preferably 1 to 30 parts by mass, relative to 100 parts by mass of the support. The zeolite can be used, for example, within the range of 1 to 40 parts by mass and preferably 1 to 30 parts by mass, relative to 100 parts by mass of the support. The ratio between the oxide and the zeolite is preferably such that the zeolite is within the range of 5 to 200 parts by mass relative to 100 parts by mass of the oxide.

Exhaust gases to be treated in the present invention include exhaust gases discharged from internal combustion engines, such as diesel engines and gasoline engines, and exhaust gases from various combustion facilities.

The exhaust gas purification filter according to the present invention is placed in a flow path of exhaust gases and thus used in contact with the exhaust gases. The removal of PM in these exhaust gases is performed by depositing PM on the filter and heating the filter having a predetermined amount of PM deposited thereon to the combustion temperature of PM in the presence of oxygen. On the other hand, the removal of NOx in the exhaust gases is performed in the presence of a reductant, for example, an ammonia precursor, such as urea, ammonium carbonate, hydrazine or ammonium hydrogen carbonate, or ammonia itself. The reductant may be located upstream of the exhaust gas purification filter of the present invention in the flow path of exhaust gases and supplied by a necessary amount as appropriate.

The exhaust gas purification filter according to the present invention can achieve, with a single filter, both the combustion of PM, which is a toxic substance in exhaust gases, and the removal of NOx by reduction. The exhaust gas purification filter according to the present invention, because of its excellent functions, can be suitably used as a filter for a diesel engine (DPF), a filter for a gasoline engine or the like and can respond to the request for downsizing from the market.

(Exhaust Gas Purification Apparatus)

An exhaust gas purification apparatus according to the present invention include the above-described exhaust gas purification filter according to the present invention. Specifically, the exhaust gas purification apparatus includes, in addition to the exhaust gas purification filter according to the present invention, for example, a means of supplying a reductant or the like to the exhaust gas purification filter, a means of applying heat to the exhaust gas purification filter in order to decompose deposited PM, and so on.

Examples

The present invention will be described below in further detail with reference to examples. The present invention is not at all limited by the following examples and modifications and variations may be appropriately made therein without changing the gist of the invention.

[Synthesis of Oxide]

(Synthesis Example 1)

An amount of 33.2 parts by mass of sodium carbonate, 38.6 parts by mass of zirconium oxide, and 28.2 parts by mass of silicon oxide were mixed and the mixture was fired at 1200°C for four hours. The resultant particulate solid was confirmed to be single-phase $Na_4Zr_2Si_3O_{12}$ by X-ray diffractometry.

(Synthesis Example 2)

An amount of 36.2 parts by mass of potassium carbonate, 32.3 parts by mass of zirconium oxide, and 31.5 parts by mass of silicon oxide were mixed and the mixture was fired at 1200°C for four hours. The resultant particulate solid was confirmed to be single-phase $K_2ZrSi_2O_7$ by X-ray diffractometry.

(Synthesis Example 3)

An amount of 32.3 parts by mass of sodium carbonate, 31.1 parts by mass of aluminum oxide, and 36.6 parts by mass of silicon oxide were mixed and the mixture was fired at 1200°C for four hours. The resultant particulate solid was confirmed to be single-phase $NaAlSiO_4$ by X-ray diffractometry.

(Synthesis Example 4)

An amount of 38.4 parts by mass of potassium carbonate, 28.3 parts by mass of aluminum oxide, and 33.3 parts by mass of silicon oxide were mixed and the mixture was fired at 1200°C for four hours. The resultant particulate solid was confirmed to be single-phase $KAlSiO_4$ by X-ray diffractometry.

(Synthesis Example 5)

An amount of 49.7 parts by mass of potassium carbonate, 28.7 parts by mass of titanium oxide, and 21.6 parts by mass of silicon oxide were mixed and the mixture was fired at 1000°C for four hours. The resultant particulate solid was confirmed to be single-phase $K_2TiSiO_5$ by X-ray diffractometry.

(Synthesis Example 6)

An amount of 22.4 parts by mass of potassium carbonate and 77.6 parts by mass of titanium oxide were mixed and the mixture was fired at 1000°C for four hours. The resultant particulate solid was confirmed to be single-phase $K_2Ti_6O_{13}$ by X-ray diffractometry.

(Synthesis Example 7)

An amount of 28.5 parts by mass of sodium carbonate and 71.5 parts by mass of niobium oxide were mixed and the mixture was fired at 950°C for four hours. The resultant particulate solid was confirmed to be single-phase $NaNbO_3$ by X-ray diffractometry.

(Example 1)

[Production of Support and Supporting of Oxide thereon]

Compounded into 10 parts by mass of an oxide ($Na_4Zr_2Si_3O_{12}$) were 90 parts by mass of aluminum titanate (manufactured by MARUSU GLAZE, Co., Ltd.), 10 parts by mass of graphite, 10 parts by mass of methylcellulose, and 0.5 parts by mass of fatty acid soap. A suitable amount of water was also added to the mixture and the mixture was then kneaded to obtain an extrudable clay.
The obtained clay was extruded and formed into a honeycomb structure by an extruder to obtain a green body. The cell density of the die was 300 cells/inch$^2$ (46.5 cells/cm$^2$) and the wall thickness was 300 $\mu$m.
A slurry was prepared the solid of which was substantially made of particles of the above-mentioned aluminum titanate and the above-mentioned oxide ($Na_4Zr_2Si_3O_{12}$) and to which an additive, such as a viscosity modifier, was added. The ratio of the solid in the slurry is similar as described above. This slurry was applied in some of the cells of the green body having a honeycomb structure to seal some of the cell openings so that the open cells and sealed cells of the honeycomb structure gave a checkered pattern.

The resultant green body was fired by holding it at 600°C for 10 hours, then raising the temperature to 1000°C at a rate of 25°C/h, and holding it at 1000°C for 10 hours, resulting in a honeycomb structure with a pore diameter of 11 $\mu$m and a porosity of 51%.

[Supporting of Zeolite]

Next, 40 parts by weight of ZSM-5 zeolite (HSZ-840 manufactured by Tosoh Corporation) and 2 parts by weight of copper acetate were wet mixed and the mixture was further mixed with 20 parts by weight of silica sol and 40 parts by weight of water to prepare a slurry. The honeycomb structure obtained as above was immersed into the prepared slurry. After the immersion, the honeycomb structure was fired at 600°C to 700°C for about four hours to produce an exhaust gas purification filter. The silica / alumina ratio of the zeolite used is shown in Table 1.

The amount of zeolite supported on the honeycomb structure was 19 parts by mass relative to 90 parts by mass of aluminum titanate.

(Example 2)

The production was performed in the same manner as in Example 1 except that the oxide was changed to $K_2ZrSi_2O_7$. The pore diameter was 11 $\mu$m and the porosity was 53%.

(Example 3)

The production was performed in the same manner as in Example 1 except that the oxide was changed to $NaAlSiO_4$ and the firing temperature of the green body during the production of the support was changed to 1100°C. The pore diameter was 13 $\mu$m and the porosity was 51%.

(Example 4)

The production was performed in the same manner as in Example 1 except that the oxide was changed to $KAlSiO_4$, the firing temperature of the green body during the production of the support was changed to 1100°C, and the zeolite was changed to zeolite $\beta$ (HSZ-940 manufactured by Tosoh Corporation). The pore diameter was 13 $\mu$m and the porosity was 53%.

(Example 5)

The production was performed in the same manner as in Example 1 except that the oxide was changed to $K_2TiSiO_5$, the firing temperature of the green body during the production of the support was changed to 850°C, and the zeolite was changed to $\beta$ zeolite (HSZ-930 manufactured by Tosoh Corporation). The pore diameter was 11 $\mu$m and the porosity was 53%.

(Example 6)

The production was performed in the same manner as in Example 1 except that the oxide was changed to $K_2Ti_6O_{13}$, the firing temperature of the green body during the production of the support was changed to 850°C, and the zeolite was changed to $\beta$ zeolite (HSZ-930 manufactured by Tosoh Corporation). The pore diameter was 9 $\mu$m and the porosity was 49%.

(Example 7)

The production was performed in the same manner as in Example 1 except that the oxide was changed to $NaAlSiO_4$, the firing temperature of the green body during the production of the support was changed to 1100°C, and the zeolite was changed to ZSM-5 zeolite (HSZ-820 manufactured by Tosoh Corporation). The pore diameter was 13 $\mu$m and the porosity was 51%.

(Example 8)

The production was performed in the same manner as in Example 1 except that the oxide was changed to $NaAlSiO_4$, the firing temperature of the green body during the production of the support was changed to 1100°C, and the zeolite was changed to ZSM-5 zeolite (HSZ-830 manufactured by Tosoh Corporation). The pore diameter was 13 $\mu$m and the porosity was 51%.

(Example 9)

The production was performed in the same manner as in Example 1 except that the oxide was changed to KAlSiO$_4$, the firing temperature of the green body during the production of the support was changed to 1100°C, and the zeolite was changed to ZSM-5 zeolite (HSZ-820 manufactured by Tosoh Corporation). The pore diameter was 13 $\mu$m and the porosity was 53%.

(Example 10)

The production was performed in the same manner as in Example 1 except that the oxide was changed to KAlSiO$_4$, the firing temperature of the green body during the production of the support was changed to 1100°C, and the zeolite was changed to ZSM-5 zeolite (HSZ-830 manufactured by Tosoh Corporation). The pore diameter was 13 $\mu$m and the porosity was 53%.

(Example 11)

The production was performed in the same manner as in Example 1 except that the oxide was changed to KAlSiO$_4$ and the firing temperature of the green body during the production of the support was changed to 1100°C. The pore diameter was 13 $\mu$m and the porosity was 53%.

(Comparative Example 1)

The production was performed in the same manner as in Example 1 except that the zeolite was changed to zeolite Y (HSZ-350 manufactured by Tosoh Corporation). The pore diameter was 11 $\mu$m and the porosity was 51%.

(Comparative Example 2)

The production was performed in the same manner as in Example 1 except that the oxide was changed to NaAlSiO$_4$, the firing temperature of the green body during the production of the support was changed to 1100°C, and the zeolite was changed to zeolite Y (HSZ-350 manufactured by Tosoh Corporation). The pore diameter was 13 $\mu$m and the porosity was 51%.

(Comparative Example 3)

The production was performed in the same manner as in Example 1 except that the oxide was changed to NaNbO$_3$ and the firing temperature of the green body during the production of the support was changed to 850°C. The pore diameter was 9 $\mu$m and the porosity was 47%.

(Comparative Example 4)

The production was performed in the same manner as in Example 1 except that no oxide was used, the firing temperature of the green body during the production of the support was changed to 1450°C, and the zeolite was changed to zeolite $\beta$ (HSZ-930 manufactured by Tosoh Corporation). The pore diameter was 13 $\mu$m and the porosity was 56%.

[Evaluation of NOx Concentration]

After each exhaust gas purification filter was previously immersed into a urea aqueous solution and then dried at 50°C, it was placed in an exhaust line for simulant exhaust gases. Thereafter, the simulant exhaust gases (O$_2$: 10%, N$_2$: 90%, NO: 50 ppm, NO$_2$: 50 ppm, CO: 60 ppm) were raised to 300°C and measured in terms of NOx concentration. The results are shown in Table 1.

[Filter Regeneration Rate]

After the initial weight of each exhaust gas purification filter was previously measured, an oxidation catalyst (DOC) and the exhaust gas purification filter were placed in this order in an exhaust line of a diesel engine. Subsequently, the diesel engine was started, a specific amount (approximately 8 g/L) of PM was deposited on the filter at low temperatures, then the exhaust gas purification filter was once removed from the exhaust line, and the weight of PM deposited was measured.

Next, the exhaust gas purification filter was placed in the exhaust line for the simulant exhaust gases, then the simulant exhaust gases were raised to 540°C, and a regeneration test was started. For 30 minutes after the simulant exhaust gases reached 540°C, they were held at a temperature of 540°C $\pm$ 10°C. After a lapse of 30 minutes, the total amount of the simulant gases was changed to $N_2$.

After the temperature dropped to room temperature, the exhaust gas purification filter was removed again and its weight reduction (i.e., the weight of PM combusted) was measured.

The regeneration rate was obtained from the calculation formula below. The results are shown in Table 1.

```
Regeneration rate (%) = 100 - [(weight of PM deposited (g)

- weight of PM combusted (g))/weight of PM deposited (g)] × 100.
```

[Table 1]

| | | | Filter Structure | | Filter Performance | |
| | | | | Zeolite | | |
| | Support Material | Oxide | Crystal Structure | Silica/Alumina Ratio (mol/mol) | NOx Concentration | Regeneration Rate |
|---|---|---|---|---|---|---|
| Ex.1 | aluminum titanate | $Na_4Zr_2Si_3O_{12}$ | ZSM-5 zeolite | 40 | below 20 ppm | 86% |
| Ex.2 | aluminum titanate | $K_2ZrSi_2O_7$ | ZSM-5 zeolite | 40 | below 20 ppm | 87% |
| Ex.3 | aluminum titanate | $NaAlSiO_4$ | ZSM-5 zeolite | 40 | below 20 ppm | 69% |
| Ex.4 | aluminum titanate | $KAlSiO_4$ | zeolite $\beta$ | 40 | below 20 ppm | 71% |
| Ex.5 | aluminum titanate | $K_2TiSiO_5$ | zeolite $\beta$ | 27 | below 20 ppm | 68% |
| Ex.6 | aluminum titanate | $K_2Ti_6O_{13}$ | zeolite $\beta$ | 27 | below 20 ppm | 88% |
| Ex.7 | aluminum titanate | $NaAlSiO_4$ | ZSM-5 zeolite | 25 | below 20 ppm | 68% |
| Ex.8 | aluminum titanate | $NaAlSiO_4$ | ZSM-5 zeolite | 28 | below 20 ppm | 63% |
| Ex.9 | aluminum titanate | $KAlSiO_4$ | ZSM-5 zeolite | 25 | below 20 ppm | 70% |
| Ex.10 | aluminum titanate | $KAlSiO_4$ | ZSM-5 zeolite | 28 | below 20 ppm | 72% |
| Ex.11 | aluminum titanate | $KAlSiO_4$ | ZSM-5 zeolite | 40 | below 20 ppm | 69% |
| Comp. Ex.1 | aluminum titanate | $Na_4Zr_2Si_3O_{12}$ | zeolite Y | 10 | 100ppm | 78% |
| Comp. Ex.2 | aluminum titanate | $NaAlSiO_4$ | zeolite Y | 10 | 100ppm | 61% |
| Comp. Ex.3 | aluminum titanate | $NaNbO_3$ | ZSM-5 zeolite | 40 | 100ppm | 43% |

(continued)

| | Filter Structure | | | | Filter Performance | |
|---|---|---|---|---|---|---|
| | Support Material | Oxide | Zeolite | | NOx Concentration | Regeneration Rate |
| | | | Crystal Structure | Silica/Alumina Ratio (mol/mol) | | |
| Comp. Ex.4 | aluminum titanate | - | zeolite β | 27 | below 20 ppm | 22% |

As is obvious from the results shown in Table 1, with the use of the exhaust gas purification filters of Examples 1 to 11 according to the present invention, the NOx concentration was reduced and a high regeneration rate was obtained. In contrast, with the exhaust gas purification filter of Comparative Example 1 in which the same kind of oxide as in Example 1 was used but a zeolite falling outside the scope of the present invention was used, the NOx concentration was high and the regeneration rate was low. Furthermore, also with the exhaust gas purification filter of Comparative Example 2 in which the same kind of oxide as in Example 3 was used but a zeolite falling outside the scope of the present invention was used, the NOx concentration was high and the regeneration rate was low.

In Comparative Example 3, the same kind of zeolite as in Examples 1 to 3 was used but an oxide falling outside the scope of the present invention was used, also in which case the NOx concentration was high and the regeneration rate was low.

It can be seen from the above that the use of a combination of an oxide and a zeolite both falling within the scope of the present invention can reduce the NOx concentration and offer a high regeneration rate.

In Comparative Example 4, no oxide was used but only zeolite was used. In this case, the NOx concentration could be reduced. It can be seen from this that, with the use of any oxide falling outside the scope of the present invention, the alkali metal contained in the oxide negatively affects the effect of zeolite. Therefore, it can be considered that the use of any oxide falling within the scope of the present invention reduces the elution of alkali metal negatively affecting the effect of zeolite.

**Claims**

1. An exhaust gas purification filter including:

   an oxide containing one or more elements selected from alkali metals and one or more elements selected from Zr, Si, Al, and Ti; and
   a zeolite having silica / alumina ratio of 15 or more.

2. The exhaust gas purification filter according to claim 1, wherein the oxide is included as a catalyst capable of combusting particulate matter contained in exhaust gases and the zeolite is included as a catalyst capable of reducing nitrogen oxides to nitrogen.

3. The exhaust gas purification filter according to claim 1 or 2, wherein the oxide is one or more of compounds represented by $A_{2X}Zr_XSi_YO_{3X+2Y}$, $A_XAl_XSi_YO_{2X+2Y}$, $A_{2X}Ti_XSi_YO_{3X+2Y}$, $A_{2X}Ti_YO_{X+2Y}$, $A_{2X}Zr_YO_{X+2Y}$ or $A_XAl_YO_{X/2+3Y/2}$, where A represents one or more alkali metals, X represents a positive real number satisfying $1 \leq X \leq 2$, and Y represents a positive real number satisfying $1 \leq Y \leq 6$.

4. The exhaust gas purification filter according to any one of claims 1 to 3, wherein the zeolite is one or more selected from mordenite zeolite, faujasite zeolite, zeolite A, zeolite L, zeolite β, and ZSM-5 zeolite.

5. The exhaust gas purification filter according to any one of claims 1 to 4, wherein the zeolite contains a transition metal.

6. The exhaust gas purification filter according to any one of claims 1 to 5, wherein the oxide and the zeolite are coated on a support.

7. The exhaust gas purification filter according to claim 6, wherein the support is a honeycomb filter.

8. An exhaust gas purification apparatus comprising the exhaust gas purification filter according to any one of claims 1 to 7.

**INTERNATIONAL SEARCH REPORT**

| International application No. |
| --- |
| PCT/JP2014/071772 |

A. CLASSIFICATION OF SUBJECT MATTER
*B01J29/70*(2006.01)i, *B01D53/94*(2006.01)i, *B01J29/40*(2006.01)i, *F01N3/023*
(2006.01)i, *F01N3/035*(2006.01)i, *F01N3/08*(2006.01)i, *F01N3/10*(2006.01)i,
*F01N3/28*(2006.01)i

According to International Patent Classification (IPC) or to both national classification and IPC

B. FIELDS SEARCHED

Minimum documentation searched (classification system followed by classification symbols)
B01J29/70, B01D53/94, B01J29/40, F01N3/023, F01N3/035, F01N3/08, F01N3/10,
F01N3/28

Documentation searched other than minimum documentation to the extent that such documents are included in the fields searched
Jitsuyo Shinan Koho       1922–1996    Jitsuyo Shinan Toroku Koho    1996–2014
Kokai Jitsuyo Shinan Koho  1971–2014    Toroku Jitsuyo Shinan Koho    1994–2014

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
| --- | --- | --- |
| A | JP 2011-220123 A  (Toyota Motor Corp.), 04 November 2011 (04.11.2011), entire text (Family: none) | 1-8 |
| A | JP 2007-289844 A  (Toyota Motor Corp.), 08 November 2007 (08.11.2007), entire text (Family: none) | 1-8 |
| A | WO 2002/062468 A1  (Hitachi, Ltd.), 15 August 2002 (15.08.2002), entire text & US 2004/0115104 A1    & EP 1358933 A1 | 1-8 |

☒  Further documents are listed in the continuation of Box C.        ☐  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 October, 2014 (06.10.14) | 25 November, 2014 (25.11.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/071772 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2010-223076 A (Honda Motor Co., Ltd.), 07 October 2010 (07.10.2010), entire text (Family: none) | 1-8 |
| A | WO 2012/046577 A1 (Otsuka Chemical Co., Ltd.), 12 April 2012 (12.04.2012), entire text & US 2013/0171036 A1    & EP 2626132 A1 & CN 103153465 A | 1-8 |
| A | Qiang WANG, Jong Shik CHUNG, NOx storage and reduction over $Cu/K_2Ti_2O_5$ in a wide temperature range: Activity, characterization, and mechanism, Applied Catalysis A: General, 2009.04.30, Vol.358 No.1, Pages 59-64 | 1-8 |

Form PCT/ISA/210 (continuation of second sheet) (July 2009)

**EP 3 040 122 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10118490 A

- JP 2010524677 A